# EUROPÄISCHE PATENTSCHRIFT

(11) **EP 3 615 275 B1**
(45) Veröffentlichungstag und Bekanntmachung des Hinweises auf die Patenterteilung: **29.12.2021**
(21) Anmeldenummer: 18718449.4
(22) Anmeldetag: 18.04.2018
(51) Int. Cl.: B25J 9/16

(54) **SCHRAUBVORRICHTUNG**
SCREWING DEVICE
DISPOSITIF DE VISSAGE

(30) Priorität: 23.04.2017 DE 102017003912
(43) Veröffentlichungstag der Anmeldung: 04.03.2020
(73) Patentinhaber: Franka Emika GmbH, 80797 München (DE)
(72) Erfinder: ENDE, Tobias, 81247 München (DE); HAAS, Michael, 86447 Todtenweis-Sand (DE); GOLZ, Saskia, 80639 München (DE); PARUSEL, Sven, 80687 München (DE); HADDADIN, Simon, 80803 München (DE)
(74) Vertreter: Rösler Rasch van der Heide & Partner
(86) Internationale Anmeldenummer: PCT/EP2018/059832
(87) Internationale Veröffentlichungsnummer: WO 2018/197284

(56) Entgegenhaltungen:
- DE-A1-102012 108 476
- JP-A- 2012 161 860
- US-A1- 2015 127 160

## Beschreibung

Die Erfindung betrifft eine Schraubvorrichtung, bei der Schrauben aus einem Vorratsbehälter automatisiert an ein Schraubwerkzeug der Schraubvorrichtung übergeben werden.

Aus dem Dokument DE 102012108476 A1 ist hierzu eine Vorrichtung zur Befestigung einer Schraube auf einem Werkstück und Verfahren zum Beurteilen des Lösens einer Schraube bekannt. Beim Beurteilen des Lösens einer Schraube misst hierbei eine Messsektion eine Position eines Einsatzes als eine relative Position bezüglich einer Setzoberfläche einer Schraubenzuführvorrichtung, wenn die Schraube aus der Schraubenzuführvorrichtung erhalten wird. Die Messsektion misst auch die Position des Einsatzes als eine relative Position bezüglich einer Werkstückoberfläche, wenn ein Befestigen der Schraube auf ein Werkstück abgeschlossen wurde. Eine Beurteilungssektion beurteilt, dass das Schraubenlösen nicht aufgetreten ist, wenn basierend auf den ersten und zweiten Einsatzpositionen ein Unterschied zwischen der ersten und zweiten Einsatzposition innerhalb eines zulässigen Bereichs liegt. Die Beurteilungssektion beurteilt, dass das Schraubenlösen aufgetreten ist, wenn der Unterschied nicht innerhalb des zulässigen Bereichs liegt.

Die Aufgabe der Erfindung ist es, einen automatisierten Schraubvorgang zu verbessern, insbesondere eine automatisierte Übernahme von Schrauben durch ein Schraubwerkzeug, sowie die Zuverlässigkeit eines anschließenden Schraubvorgangs zu verbessern.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein erster Aspekt der Erfindung betrifft eine Schraubvorrichtung. Die vorgeschlagene Schraubvorrichtung umfasst einen Vorratsbehälter für Schrauben mit einem Schraubenkopf, einem Schraubenkopfantrieb und einem Gewindestift sowie einen Robotermanipulator mit einem auf den Schraubenkopf und den Schraubenkopfantrieb abgestimmten Effektor, der zum Aufnehmen, Handhaben und Freigeben einer solchen Schraube ausgeführt und eingerichtet ist. Der Begriff "abgestimmt" bedeutet vorliegend, dass der Effektor zum Aufnehmen bzw. Greifen der Schraube sowie zum Drehen der Schraube, d.h. zum Übertrag von Drehmomenten in die Schraube ausgeführt ist.

Weiterhin umfasst die Schraubvorrichtung eine mit dem Vorratsbehälter verbundene Vereinzelungseinheit, die Schrauben aus dem Vorratsbehälter an einer (mechanischen) Schnittstelle derart vereinzelt an einer bekannten Position bereitstellt, dass ein jeweiliger Schraubenkopf für den Effektor zugänglich ist. Der Schraubenkopf ist vorteilhaft insoweit frei zugänglich, so dass der Effektor die Schraube am Schraubenkopf greifen bzw. aufnehmen kann. Der Effektor weist vorteilhaft eine Greifvorrichtung und/oder eine Magnetvorrichtung zum Aufnehmen bzw. Greifen des Schraubenkopfes auf.

Die Vorrichtung umfasst weiterhin eine Steuereinheit zum Steuern und/oder Regeln des Robotermanipulators, wobei die Steuereinheit zur Ausführung folgenden ersten Steuerprogramms ausgeführt und eingerichtet ist. Das Ausführen des ersten Steuerprogramms steuert den Robotermanipulator derart an, dass der Effektor durch den Robotermanipulator entlang einer vorgegebenen Trajektorie T1 mit einer Soll-Orientierung O_{soll,T1}(R_{T1}) zum Schraubenkopf einer an der Schnittstelle bereitgestellten Schraube geführt wird, wobei entlang der Trajektorie T1 für Orte R_{T1} der Trajektorie T1 die Soll-Orientierung O_{soll,T1}(R_{T1}) des Effektors definiert ist, wobei zum Aufnehmen des Schraubenkopfes in den Effektor durch den Robotermanipulator kraftgeregelte oder impedanzgeregelte oder admittanzgeregelte Drehbewegungen und/oder Kippbewegungen und/oder translatorische Bewegungsmuster des Effektors ausgeführt werden, bis eine bereitgestellte Kraft-/Momenten-Signatur oder eine Positions-/Geschwindigkeitssignatur am Effektor erreicht oder überschritten wird, die indiziert, dass das Aufnehmen der Schraube durch den Effektor innerhalb vordefinierter Toleranzen erfolgreich abgeschlossen ist.

Unter dem Begriff "Trajektorie" wird vorliegend eine Bahnkurve, insbesondere eine dreidimensionale Bahnkurve verstanden.

Der Begriff "Signatur" beschreibt vorliegend einen vorgegebenen Parameterdatensatz mit zugeordneten Werten und/oder intervallgrenzen und/oder ein vorgegebenes Zeitverhalten (bspw. durch Zeitableitungen) eines vorgegebenen Parameterdatensatzes zur Identifikation des erfolgreichen Abschlusses des Aufnehmens der Schraube durch den Effekltor. Die "Signatur" beschreibt somit eine Kombination von Parametern und/oder deren Zeitverhalten. So kann beispielsweise ein vorgegebenes Kraft-Zeitverhalten den erfolgreichen Abschluss des Aufnehmens der Schraube definieren.

Die Dreh- und Kippbewegungen des Effektors beginnen vorteilhaft erst ab einer vorgegebenen Entfernung des Effektors vom aufzunehmenden Schraubenkopf. Diese Entfernung beträgt vorteilhaft 0,1 bis 2 cm. Diese Entfernung ist vorteilhaft von der Dimension des Schraubenkopfes abhängig. Vorteilhaft beginnen die kraftgeregelten Dreh-und Kippbewegungen des Effektors bei größerer Entfernung, wenn der Schraubenkopf eine größere Dimension aufweist und umgekehrt. Die Kippbewegungen erfolgen vorteilhaft relativ zur Soll-Orientierung O_{soll,T1}(R_{T1}) des Effektors um eine, zwei oder drei Kippachsen, wobei die entsprechenden Kippwinkel vorteilhaft in einem Winkelbereich bis zu ± 1°, ± 2°, ± 5°, ± 7°, ± 10°, ± 12°, ± 15° zur Soll-Orientierung O_{soll,T1}(R_{T1}) liegen. Die Drehbewegungen erfolgen um eine Drehachse vorteilhaft periodisch, und vorteilhaft in einem Drehwinkelbereich von ± 1°, ± 2°, ± 5°, ± 7°, ± 10°, ± 12°, ± 15°. Die Kippbewegungen und oder die Drehbewegungen sind vorteilhaft periodische Bewegungen. Je nach Anwendungsfall können die Drehbewegungen und/oder Kippbewegungen und Translationsbewegungen auch aperiodische Bewegungen oder eine Kombination aus aperiodischen und periodischen Bewegungen sein. Die Kippbewegungen und oder die Translationsbewegungen sind vorteilhaft geschlossene Bewegungen. Unter einer geschlossenen Kippbewegung wird vorliegend verstanden, dass für eine Orientierung O(t) des Effektors gilt: O(t₀) = O(t₁) mit t₀ < t₁. Unter einer geschlossenen Translationsbewegung wird vorliegend verstanden, dass die Bahnkurve oder zumindest eine Projektion der Bahnkurve eine geschlossene Kurve ergibt. Die Kippbewegungen/Drehbewegungen/Translationsbewegungen werden vorteilhaft kontinuierlich ausgeführt.

In einer bevorzugten Weiterbildung der vorgeschlagenen Schraubvorrichtung erfolgt das Ausführen der kraftgeregelten oder impedanzgeregelten oder admittanzgeregelte Drehbewegungen und/oder Kippbewegungen und/oder translatorischen Bewegungsmuster des Effektors während des Aufnehmens des Schraubenkopfes bevorzugt kontinuierlich, d.h. die entsprechende Bewegung des Effektors wird dabei nicht unterbrochen. Die translatorischen Bewegungsmuster sind vorzugsweise geschlossene Bewegungsmuster, bei denen einen Bewegungsbahn des Effektors oder zumindest deren Projektion eine geschlossene Bahn ergibt. Die Kippbewegungen sind ebenfalls bevorzugt geschlossene Bewegungen, bei denen der Effektor aus einer ersten Orientierung O(t₀) zur Zeit to vergibt wird, wobei gilt: O(t₁) = O(t₀), mit t₁ > t₀.

In einer bevorzugten Weiterbildung der vorgeschlagenen Schraubvorrichtung erfolgt das Ausführen der kraftgeregelten oder impedanzgeregelten oder admittanzgeregelte Drehbewegungen und/oder Kippbewegungen und/oder translatorischen Bewegungsmuster des Effektors während des Aufnehmens des Schraubenkopfes bevorzugt getaktet, d.h. die entsprechende Bewegung des Effektors erfolgt schrittweise (Bewegung-Stop-Bewegung-Stop- etc.). Die Bewegungsphasen und die Stop-Phasen sind in einer vorteilhaften Weiterbildung zeitlich gleich lang, in einer anderen vorteilhaften Weiterbildung zeitlich unterschiedlich lang.

Die vorgeschlagene Schraubvorrichtung ermöglicht ein verbessertes vorteilhaftes Aufnehmen von Schrauben von der Schnittstelle.

Die in dieser Erfindung ausgeführten translatorischen Bewegungsmuster werden vorteilhaft periodisch mit einer kontinuierlichen oder schrittweisen Bewegung ausgeführt.

Eine vorteilhafte Weiterbildung der vorgeschlagenen Schraubvorrichtung zeichnet sich dadurch aus, dass die Steuereinheit zur Ausführung des folgenden zweiten Steuerprogramms ausgeführt und eingerichtet ist. Gemäß dem zweiten Steuerprogramm wird die vom Effektor aufgenommene Schraube durch den Robotermanipulator entlang einer vorgegebenen Trajektorie T2 mit einer Soll-Orientierung O_{soll,T2}(R_{T2}) des Gewindestifts der Schraube zu einem an einer bis auf ein Toleranzband bekannten Position angeordneten Gewinde geführt, wobei entlang der Trajektorie T2 für Orte R_{T2} der Trajektorie T2 die Soll-Orientierung O_{soll,T2}(R_{T2}) des Gewindestifts der Schraube definiert ist, wobei zum Einbringen des freien Endes des Gewindestifts der Schraube in das Gewinde durch den Robotermanipulator kraftgeregelte oder impedanzgeregelte oder admittanzgeregelte Drehbewegungen und/oder Kippbewegungen und/oder translatorische Bewegungsmuster der Schraube ausgeführt werden, bis eine bereitgestellte Kraft-/Momenten-Signatur oder eine Positions-/Geschwindigkeitssignatur am Effektor erreicht oder überschritten wird, die indiziert, dass das freie Ende des Gewindestifts in das Gewinde erfolgreich in das Gewinde eingebracht ist.

In einer bevorzugten Weiterbildung der vorgeschlagenen Schraubvorrichtung erfolgt das Ausführen der Kippbewegungen des Gewindestifts relativ zu dessen Sollorientierung Oₛₒₗₗ,_{T2}(R_{T2}), vorteilhaft kontinuierlich, d.h. die entsprechende Bewegung des Effektors wird dabei nicht unterbrochen.

In einer bevorzugten Weiterbildung der vorgeschlagenen Schraubvorrichtung erfolgt das Ausführen der Drehbewegungen und/oder translatorischen Bewegungsmuster des Gewindestifts kontinuierlich, d.h. die entsprechende Bewegung des Effektors wird dabei nicht unterbrochen.

In einer bevorzugten Weiterbildung der vorgeschlagenen Schraubvorrichtung erfolgt das Ausführen der Drehbewegungen und/oder Kippbewegungen und/oder translatorische Bewegungsmuster des Gewindestifts bevorzugt getaktet, d.h. die entsprechende Bewegung des Effektors erfolgt schrittweise (Bewegung-Stop-Bewegung-Stop- etc.). Die Bewegungsphasen und die Stop-Phasen sind in einer vorteilhaften Weiterbildung zeitlich gleich lang, in einer anderen vorteilhaften Weiterbildung zeitlich unterschiedlich lang.

Gemäß einer vorteilhaften Weiterentwicklung der Schraubvorrichtung ist die Steuereinheit zur Ausführung des folgenden dritten Steuerprogramms ausgeführt und eingerichtet. Gemäß diesem Steuerprogramm erfolgt nach dem erfolgreichen Einbringen des freien Endes des Gewindestifts in das Gewinde ein kraftgeregeltes oder impedanzgeregeltes oder admittanzgeregeltes Eindrehen der Schraube in das Gewinde, bis eine bereitgestellte Kraft-/Momenten-Signatur oder eine Positions-/Geschwindigkeitssignatur am Effektor erreicht oder überschritten wird, die indiziert, dass die Schraube erfolgreich in das Gewinde eingedreht ist.

In einer vorteilhaften Weiterbildung der vorgeschlagenen Schraubvorrichtung ist die Steuereinheit derart ausgeführt und eingerichtet, dass bei der Regelung der vorstehend angeführten Bewegungen des Effektors bzw. des Robotermanipulators berücksichtigt wird, dass eine Impedanz, ein Vorsteuerkraftwinder und/oder eine Soll-Position zeitvariant ist.

Eine vorteilhafte Weiterbildung der Schraubvorrichtung zeichnet sich dadurch aus, dass die Schraube(n) ferromagnetisch und der Effektor magnetisch ist, wobei das Aufnehmen und Halten der Schraube im Effektor aufgrund der magnetischen Anziehung von Schraube und Effektor bewirkt wird.

Eine vorteilhafte Weiterbildung der Schraubvorrichtung zeichnet sich dadurch aus, dass das Aufnehmen und Halten der Schraube im Effektor aufgrund eines Unterdrucks bewirkt wird. Die Schraubvorrichtung weist hierfür eine entsprechende Unterdruckpumpe auf, die entsprechend von der Steuereinheit gesteuert bzw. geregelt wird.

Eine vorteilhafte Weiterbildung der Schraubvorrichtung zeichnet sich dadurch aus, dass die Schraubvorrichtung eine Datenschnittstelle zu einem Datennetz (bspw. Internet, LAN, Local Area Network) aufweist, und die Schraubvorrichtung dazu eingerichtet und ausgeführt ist, das erste und/oder das zweite und/oder das dritte Steuerprogramm und/oder weitere Steuerprogramme aus dem Datennetz zu laden. Vorteilhaft verfügt die Schraubvorrichtung hierzu über ein Dateninterface sowie einen entsprechenden Programmspeicher. Vorteilhaft werden die Steuerprogramme von einem zentralen Provider im jeweiligen Datennetz verfügbar gemacht. Das Datennetz ist vorteilhaft ein leitungsgebundenes Datennetz, ein Funk-Datennetz oder eine Kombination daraus.

Vorteilhaft ist die Schraubvorrichtung dazu eingerichtet und ausgeführt, Steuerungs- und Regelungsparameter zu dem ersten und/oder zweiten und/oder dritten Steuerprogramm und/oder zu weiteren Steuerprogrammen aus dem Datennetz zu laden. Die Steuerungs-und Regelungsparameter definieren die konkrete Anwendung des entsprechenden Steuerprogramms. Die Steuerungs- und Regelungsparameter sind insbesondere an die zu lösende Aufgabenstellung angepasst. Vorteilhaft verfügt die Schraubvorrichtung hierfür über einen entsprechenden Datenspeicher.

Vorteilhaft ist die Schraubvorrichtung dazu eingerichtet und ausgeführt, Steuerungs- und Regelungsparameter zu dem ersten und/oder dem zweiten und/oder dem dritten Steuerprogramm und/oder zu weiteren Steuerprogrammen über eine manuelle Eingabeschnittstelle der Schraubvorrichtung (beispielsweise eine im Bereich der Schraubvorrichtung verfügbare Mensch-Maschine-Schnittstelle) und/oder über einen "Teach-In-Vorgang" zu laden, bei dem der Robotermanipulator manuell geführt wird, d.h. durch Aufbringen einer Kraft durch einen Nutzer bewegt wird. Weiterhin ermöglicht sowohl die manuelle Eingabeschnittstelle als auch ein mit dem Robotermanipulator durchgeführter "Teach-In-Vorgang" eine Korrektur bzw. Anpassung von aus dem Datennetz geladener Steuerungs- und Regelungsparameter.

Vorteilhaft ist die Schraubvorrichtung dazu eingerichtet und ausgeführt, dass das Laden von Steuerungsprogrammen und/oder von zugehörigen Steuerungs- und Regelungsparametern aus dem Datennetz von einer Remote-Station, die ebenfalls mit dem Datennetz verbunden ist, gesteuert wird. Derartige Remote-Stationen können beispielsweise Tablet PCs, Smartphones, Notebooks, Personalcomputer etc. sein. Vorteilhaft wird eine Remote-Station von einem zentralen Provider betrieben.

Vorteilhaft ist die Schraubvorrichtung dazu eingerichtet und ausgeführt, lokal an der Schraubvorrichtung vorhandene Steuerungsprogramme und/oder zugehörige Steuerungs- und Regelungsparameter nach Anforderung von einem Teilnehmer im Datennetz und/oder autonom, bspw. bei Vorliegen einer vorgegebenen Bedingung, an andere Teilnehmer im Datennetz zu senden. Ein solcher "Teilnehmer" kann grundsätzlich jede für diesen Datenaustausch eingerichtete Rechner- und/oder Speichereinheit sein.

Vorteilhaft ist die Schraubvorrichtung dazu eingerichtet und ausgeführt, lokal an der Schraubvorrichtung geladene Steuerungsprogramme mit den zugehörigen Steuerungs- und Regelungsparametern von einer Remote-Station, die ebenfalls mit dem Datennetz verbunden ist, zu starten. Derartige Remote-Stationen können beispielsweise Tablet PCs, Smartphones, Notebooks, Personalcomputer etc. sein. Vorteilhaft wird eine Remote-Station von einem zentralen Provider betrieben.

Vorteilhaft weisen die Remote-Station und/oder die manuelle Eingabeschnittstelle an der Schraubvorrichtung eine Mensch-Maschine-Schnittstelle auf, die zur Eingabe von Steuerungsprogrammen und/oder zugehörigen Steuerungs- und Regelungsparameter; und/oder zur Auswahl von Steuerungsprogrammen und/oder zugehörigen Steuerungs- und Regelungsparametern aus einer Mehrzahl von verfügbaren Steuerungsprogrammen und/oder zugehörigen Steuerungs- und Regelungsparametern ausgeführt und eingerichtet ist.

Vorteilhaft ermöglicht die Mensch-Maschine-Schnittstelle Eingaben via einer "Drag-and-Drop"- Eingabe an einem Touchscreen, einem geführten Eingabedialog, einer Tastatur, einer Computermouse, einer haptischen Eingabeschnittstelle, einer Virtual-Reality-Brille, einer akustischen Eingabeschnittstelle, eines Körpertracking, auf Basis von Elektromyographie-Daten, auf Basis von Elektroenzephalografie-Daten, via einer neuronalen Schnittstelle zum Gehirn des Bedieners oder Kombinationen daraus.

Vorteilhaft ist die Mensch-Maschine-Schnittstelle zur Ausgabe eines audiovisuellen, haptischen, olfaktorischen, taktilen, elektrischen Feedbacks oder einer Kombination daraus ausgeführt und eingerichtet.

Ein weiterer Aspekt der Erfindung betrifft ein Verfahren zum Betrieb einer Schraubvorrichtung, wobei die Schraubvorrichtung umfasst: einen Vorratsbehälter für Schrauben mit einem Schraubenkopf, einem Schraubenkopfantrieb und einem Gewindestift, einen Robotermanipulator mit einem auf den Schraubenkopf abgestimmten Effektor, der zum Aufnehmen und Handhaben einer solchen Schraube ausgeführt und eingerichtet ist, eine mit dem Vorratsbehälter verbundene Vereinzelungseinheit, die Schrauben aus dem Vorratsbehälter an einer Schnittstelle derart vereinzelt an einer bekannten Position bereitstellt, dass ein jeweiliger Schraubenkopf für den Effektor zugänglich ist, sowie eine Steuereinheit zum Steuern/Regeln des Robotermanipulators, wobei die Steuereinheit folgendes erstes Steuerprogramm ausführt.

Gemäß des ersten Steuerprogramms wird der Effektor durch den Robotermanipulator entlang einer vorgegebenen Trajektorie T1 mit einer Soll-Orientierung O_{soll,T1}(R_{T1}) zum Schraubenkopf einer an der Schnittstelle bereitgestellten Schraube geführt, wobei entlang der Trajektorie T1 für Orte R_{T1} der Trajektorie T1 die Soll-Orientierung O_{soll,T1}(R_{T1}) des Effektors definiert ist, wobei zum Aufnehmen des Schraubenkopfes in den Effektor durch den Robotermanipulator kraftgeregelte oder impedanzgeregelte oder admittanzgeregelte Drehbewegungen und/oder Kippbewegungen und/oder translatorische Bewegungsmuster des Effektors ausgeführt werden, bis eine bereitgestellte Kraft-/Momenten-Signatur oder eine Positions-/Geschwindigkeitssignatur am Effektor erreicht oder überschritten wird, die indiziert, dass das Aufnehmen der Schraube durch den Effektor innerhalb vordefinierter Toleranzen erfolgreich abgeschlossen ist.

In einer bevorzugten Weiterbildung des vorgeschlagenen Verfahrens erfolgt das Ausführen der kraftgeregelten oder impedanzgeregelten oder admittanzgeregelten Drehund/oder Kippbewegungen und/oder translatorischen Bewegungsmuster des Effektors während des Aufnehmens des Schraubenkopfes bevorzugt kontinuierlich, d.h. die entsprechende Bewegung des Effektors wird dabei nicht unterbrochen.

In einer bevorzugten Weiterbildung des vorgeschlagenen Verfahrens erfolgt das Ausführen der kraftgeregelten oder impedanzgeregelten oder admittanzgeregeiten Dreh- und/oder Kippbewegungen und/oder translatorischen Bewegungsmuster des Effektors während des Aufnehmens des Schraubenkopfes bevorzugt getaktet, d.h. die entsprechende Bewegung des Effektors erfolgt schrittweise (Bewegung-Stop-Bewegung-Stop- etc.). Die Bewegungsphasen und die Stop-Phasen sind in einer vorteilhaften Weiterbildung zeitlich gleich lang, in einer anderen vorteilhaften Weiterbildung zeitlich unterschiedlich lang.

Der Begriff "Signatur" wird vorliegend für eine charakteristische Wertekombination und/oder Werteabfolge der erfassten Kräfte und Momente verwendet. Die angeführten Dreh- und/oder Kippbewegungen sind vorteilhaft periodische und/oder in sich geschlossene Bewegungen, die kontinuierlich oder schrittweise erfolgen. Alternativ können die Dreh- und/oder Kippbewegungen aperiodische Bewegungen sein. Aperiodische und periodische Bewegungen können sich auch abwechseln. Die in dieser Erfindung ausgeführten translatorischen Bewegungsmuster werden vorteilhaft periodisch mit einer kontinuierlichen oder schrittweisen Bewegung ausgeführt.

Eine vorteilhafte Weiterbildung des Verfahrens zeichnet sich dadurch aus, dass die Steuereinheit folgendes zweites Steuerprogramm ausführt. Gemäß dem zweiten Steuerprogramm wird die vom Effektor aufgenommene Schraube durch den Robotermanipulator entlang einer vorgegebenen Trajektorie T2 mit einer Soll-Orientierung O_{soll,T2}(R_{T2}) zu einem an einer bekannten Position angeordneten Gewinde geführt, wobei entlang der Trajektorie T2 für Orte R_{T2} der Trajektorie T2 die Soll-Orientierung O_{soll,T2}(R_{T2}) des Gewindestifts der Schraube definiert ist, wobei zum Einbringen des freien Endes des Gewindestifts der Schraube in das Gewinde durch den Robotermanipulator kraftgeregelte oder impedanzgeregelte oder admittanzgeregelte Drehbewegungen und/oder Kippbewegungen und/oder translatorische Bewegungsmuster der Schraube ausgeführt werden, bis eine bereitgestellte Kraft-/Momenten-Signatur oder eine Positions-/Geschwindigkeitssignatur am Effektor erreicht oder überschritten wird, die indiziert, dass das freie Ende des Gewindestifts erfolgreich in das Gewinde eingebracht ist.

Gemäß einer Weiterbildung des vorgeschlagenen Verfahrens führt die Steuereinheit folgendes drittes Steuerprogramm aus. Gemäß dem dritten Steuerprogramm erfolgt nach dem erfolgreichen Einbringen des freien Endes des Gewindestifts in das Gewinde ein kraftgeregeltes oder impedanzgeregeltes oder admittanzgeregeltes Eindrehen der Schraube in das Gewinde, bis eine bereitgestellte Kraft-/Momenten-Signatur oder eine Positions-/Geschwindigkeitssignatur am Effektor erreicht oder überschritten wird, die indiziert, dass die Schraube erfolgreich in das Gewinde eingedreht ist.

Vorliegend wird unter dem "erfolgreichen" Einbringen des freien Endes des Gewindestifts in das Gewinde verstanden, dass die Schraube derart in das Gewinde eingebracht ist, dass die Schraube im Gewinde "gegriffen" hat, sodass ein weiteres Eindrehen der Schraube in das Gewinde möglich ist.

Eine vorteilhafte Weiterbildung des Verfahrens zeichnet sich dadurch aus, dass die Schraubvorrichtung eine Datenschnittstelle zu einem Datennetz aufweist, und die Schraubvorrichtung das erste und oder das zweite und/oder das dritte Steuerprogramm und/oder weitere Steuerprogramme aus dem Datennetz lädt.

Eine vorteilhafte Weiterbildung des Verfahrens zeichnet sich dadurch aus, dass die Schraubvorrichtung Steuerungs- und Regelungsparameter zu dem ersten und/oder zweiten und/oder dritten Steuerprogramm und/oder zu weiteren Steuerprogrammen aus dem Datennetz lädt.

Eine vorteilhafte Weiterbildung des Verfahrens zeichnet sich dadurch aus, dass die Schraubvorrichtung Steuerungs- und Regelungsparameter zu dem ersten und/oder dem zweiten und/oder dem dritten Steuerprogramm und/oder zu weiteren Steuerprogrammen über eine lokale Eingabeschnittstelle und/oder über einen "Teach-In-Vorgang", bei dem der Robotermanipulator manuell geführt wird, lädt.

Eine vorteilhafte Weiterbildungsverfahren zeichnet sich dadurch aus, dass das Laden von Steuerungsprogrammen und/oder von zugehörigen Steuerungs- und Regelungsparametern aus dem Datennetz in die Schraubvorrichtung von einer Remote-Station, die ebenfalls mit dem Datennetz verbunden ist, gesteuert wird.

Eine vorteilhafte Weiterbildung des Verfahrens zeichnet sich dadurch aus, dass lokal in der Schraubvorrichtung vorhandene Steuerungsprogramme und/oder zugehörige Steuerungs- und Regelungsparametern nach Anforderung von einem Teilnehmer im Datennetz oder autonom, bspw. bei Vorliegen einer vorgegebenen Bedingung, an andere Teilnehmer im Datennetz zu senden.

Eine vorteilhafte Weiterbildung des Verfahrens zeichnet sich dadurch aus, dass lokal an der Schraubvorrichtung geladene/vorhandene Steuerungsprogramme mit den zugehörigen Steuerungs- und Regelungsparametern von einer Remote-Station, die ebenfalls mit dem Datennetz verbunden ist, individuell gestartet werden.

Eine vorteilhafte Weiterbildung des Verfahrens zeichnet sich dadurch aus, dass die Remote-Station und/oder die lokale Eingabeschnittstelle ein Mensch-Maschine-Interface aufweist/aufweisen, in die Eingaben zu Steuerungsprogrammen und/oder zugehörigen Steuerungs- und Regelungsparametern und/oder in die Eingaben zur Auswahl von Steuerungsprogrammen und/oder zugehörigen Steuerungs- und Regelungsparametern aus einer Mehrzahl von verfügbaren Steuerungsprogrammen und/oder zugehörigen Steuerungs- und Regelungsparametern erfolgen.

Eine vorteilhafte Weiterbildung des Verfahrens zeichnet sich dadurch aus, dass das Mensch-Maschine-Interface Eingaben via einer "Drag-and-Drop" Eingabe an einem Touchscreen, einem geführten Eingabedialog, einer Tastatur, einer Computermouse, einer haptischen Eingabeschnittstelle, einer Virtual-Reality-Brille, einer akustischen Eingabeschnittstelle, eines Körpertracking, auf Basis von Etektromyographie-Daten, auf Basis von Elektroenzephalografie-Daten, via einer neuronalen Schnittstelle zum Gehirn oder einer Kombination daraus erfolgen.

Ein weiterer Aspekt der Erfindung betrifft ein digitales Speichermedium mit elektronisch auslesbaren Steuersignalen, wobei die Steuersignale so mit einem programmierbaren Computersystem zusammenwirken können, dass ein Verfahren, wie vorstehend beschrieben, ausgeführt wird.

Ein weiterer Aspekt der Erfindung betrifft ein Computer-Programm-Produkt mit auf einem maschinenlesbaren Träger gespeichertem Programmcode zur Durchführung des Verfahrens, wie vorstehend beschrieben, wenn der Programmcode auf einer Datenverarbeitungsvorrichtung ausgeführt wird.

Ein weiterer Aspekt der Erfindung betrifft ein Computer-Programm mit Programmcodes zur Durchführung des Verfahrens, wie vorstehend beschrieben, wenn das Programm auf einer Datenverarbeitungsvorrichtung abläuft. Dazu kann die Datenverarbeitungsvorrichtung als ein beliebiges aus dem Stand der Technik bekanntes Computersystem ausgestaltet sein.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: eine stark schematisierte Darstellung einer Schraubvorrichtung, und
- Fig. 2: einen stark schematisierten Ablaufplan des vorgeschlagenen Verfahrens.

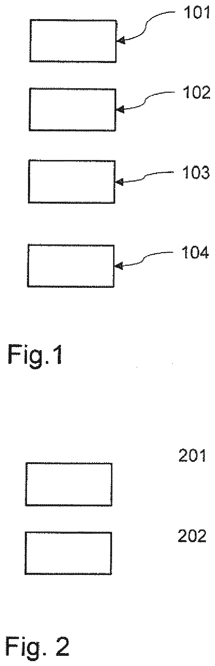

**Fig.** 1 zeigt eine stark schematisierte Darstellung der vorgeschlagenen Schraubvorrichtung. Die Schraubvorrichtung umfasst einen Vorratsbehälter 101 für Schrauben mit einem Schraubenkopf, einem Schraubenkopfantrieb und einem Gewindestift, einen Robotermanipulator 103 mit einem auf den Schraubenkopf abgestimmten Effektor, der zum Aufnehmen und Handhaben einer solchen Schraube ausgeführt und eingerichtet ist, eine mit dem Vorratsbehälter 101 verbundene Vereinzelungseinheit 102, die Schrauben aus dem Vorratsbehälter 102 an einer Schnittstelle derart vereinzelt an einer bekannten Position bereitstellt, dass ein jeweiliger Schraubenkopf für den Effektor zugänglich ist, und eine Steuereinheit 104 zum Steuern/Regeln des Robotermanipulators, wobei die Steuereinheit 104 zur Ausführung folgenden ersten Steuerprogramms ausgeführt und eingerichtet ist.

Gemäß dem ersten Steuerprogramm wird der Effektor durch den Robotermanipulator entlang einer vorgegebenen Trajektorie T1 mit der Soll-Orientierung O_{soll,T1}(R_{T1}) zum Schraubenkopf einer an der Schnittstelle bereitgestellten Schraube geführt, wobei entlang der Trajektorie T1 für Orte R_{T1} der Trajektorie T1 die Soll-Orientierung O_{soll,T1}(R_{T1}) des Effektors definiert ist.

Zum Aufnehmen des Schraubenkopfes in den Effektor werden durch den Robotermanipulator kraftgeregelte Dreh- und Kippbewegungen des Effektors relativ zu dessen Sollorientierung O_{soll,T1}(R_{T1}) ausgeführt, bis eine vorgegebene Grenzwertbedingung G1 für ein am Effektor wirkendes Moment und/oder eine vorgegebene Grenzwertbedingung G2 einer am Effektor wirkenden Kraft und/oder eine Grenzwertbedingung G3 für eine Zeit zur Durchführung der Dreh- und/oder Kippbewegungen erreicht oder überschritten wird und/oder eine bereitgestellte Kraft-/Momenten-Signatur und/oder eine Positions-/Geschwindigkeitssignatur am Effektor erreicht oder überschritten wird, die indiziert/indizieren, dass das Aufnehmen der Schraube durch den Effektor innerhalb vordefinierter Toleranzen erfolgreich abgeschlossen ist. Die kraftgeregelten Dreh- und Kippbewegungen des Effektors beginnen vorteilhaft erst ab einer vorgegebenen Entfernung des Effektors vom aufzunehmenden Schraubenkopf von 0,5 cm.

Fig. 2 zeigt einen stark schematisierten Ablaufplan des vorgeschlagenen Verfahrens zum Betrieb einer Schraubvorrichtung, wobei die Schraubvorrichtung umfasst: einen Vorratsbehälter für Schrauben mit einem Schraubenkopf, einem Schraubenkopfantrieb und einem Gewindestift, einen Robotermanipulator mit einem auf den Schraubenkopf abgestimmten Effektor, der zum Aufnehmen und Handhaben einer solchen Schraube ausgeführt und eingerichtet ist, eine mit dem Vorratsbehälter verbundene Vereinzelungseinheit, die Schrauben aus dem Vorratsbehälter an einer Schnittstelle derart vereinzelt an einer bekannten Position bereitstellt, dass ein jeweiliger Schraubenkopf für den Effektor zugänglich ist, sowie eine Steuereinheit zum Steuern/Regeln des Robotermanipulators.

Die Steuereinheit ist zur Ausführung des folgenden ersten Steuerprogramms eingerichtet und ausgeführt. Gemäß des ersten Steuerprogramms wird der Effektor durch den Robotermanipulator entlang einer vorgegebenen Trajektorie T1 mit einer Soll-Orientierung O_{soll,T1}(R_{T1}) zum Schraubenkopf einer an der Schnittstelle bereitgestellten Schraube geführt 201, wobei entlang der Trajektorie T1 für Orte R_{T1} der Trajektorie T1 eine Soll-Orientierung O_{soll,T1}(R_{T1}) des Effektors definiert ist, wobei zum Aufnehmen 202 des Schraubenkopfes in den Effektor durch den Robotermanipulator kraftgeregelte und/oder impedanzgeregelte Dreh- und/oder Kippbewegungen und/oder translatorische Bewegungsmuster des Effektors relativ zu dessen Sollorientierung O_{soll,T1}(R_{T1}) ausgeführt werden, bis eine vorgegebene Grenzwertbedingung G1 für ein am Effektor wirkendes Moment und/oder eine vorgegebene Grenzwertbedingung G2 einer am Effektor wirkenden Kraft und/oder eine Grenzwertbedingung G3 für eine Zeit zur Durchführung der Dreh- und/oder Kippbewegungen erreicht oder überschritten wird und/oder eine bereitgestellte Kraft-/Momenten-Signatur und/oder eine Positions-/Geschwindigkeitssignatur am Effektor erreicht oder überschritten wird, die indiziert/indizieren, dass das Aufnehmen der Schraube durch den Effektor innerhalb vordefinierter Toleranzen erfolgreich abgeschlossen ist.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche definiert wird.

### Bezugszeichenliste

- 101: Vorratsbehälter
- 102: Vereinzelungseinheit
- 103: Robotermanipulator
- 104: Steuereinheit
- 201,202: Verfahrensschritte

## Patentansprüche

1. Schraubvorrichtung, umfassend
- einen Vorratsbehälter (101) für Schrauben mit einem Schraubenkopf, einem Schraubenkopfantrieb und einem Gewindestift,
- einen Robotermanipulator (103) mit einem auf den Schraubenkopf und den Schraubenkopfantrieb abgestimmten Effektor, der zum Aufnehmen und Handhaben einer solchen Schraube ausgeführt und eingerichtet ist,
- eine mit dem Vorratsbehälter verbundene Vereinzelungseinheit (102), die Schrauben aus dem Vorratsbehälter (102) an einer Schnittstelle derart vereinzelt an einer bekannten Position bereitstellt, dass ein jeweiliger Schraubenkopf für den Effektor zugänglich ist,
- einer Steuereinheit (104) zum Steuern/Regeln des Robotermanipulators (103), wobei die Steuereinheit (104) zur Ausführung folgenden ersten Steuerprogramms ausgeführt und eingerichtet ist:
o der Effektor wird durch den Robotermanipulator entlang einer vorgegebenen Trajektorie T1 mit einer Soll-Orientierung O_{soll,T1}(R_{T1}) zum Schraubenkopf einer an der Schnittstelle bereitgestellten Schraube geführt, wobei entlang der Trajektorie T1 für Orte R_{T1} der Trajektorie T1 die Soll-Orientierung Oₛₒₗₗ,T₁(R_{T1}) des Effektors definiert ist, wobei zum Aufnehmen des Schraubenkopfes in den Effektor durch den Robotermanipulator kraftgeregelte oder impedanzgeregelte oder admittanzgeregelte Drehbewegungen und/oder Kippbewegungen und/oder translatorische Bewegungsmuster und/oder Kraftwindermuster des Effektors ausgeführt werden, bis eine bereitgestellte Kraft-/Momenten-Signatur oder eine Positions-/Geschwindigkeitssignatur am Effektor erreicht oder überschritten wird, die indiziert, dass das Aufnehmen der Schraube durch den Effektor innerhalb vordefinierter Toleranzen erfolgreich abgeschlossen ist.

2. Schraubvorrichtung nach Anspruch 1,
bei der die Steuereinheit (104) zur Ausführung des folgenden zweiten Steuerprogramms ausgeführt und eingerichtet ist:
- die vom Effektor aufgenommene Schraube wird durch den Robotermanipulator (103) entlang einer vorgegebenen Trajektorie T2 mit einer Soll-Orientierung Oₛₒₗₗ,_{T2}(R_{T2}) zu einem an einer bis auf ein Toleranzband bekannten Position angeordneten Gewinde geführt, wobei entlang der Trajektorie T2 für Orte R_{T2} der Trajektorie T2 die Soll-Orientierung O_{soll,T2}(R_{T2}) des Gewindestifts der Schraube definiert ist, wobei zum Einbringen des freien Endes des Gewindestifts der Schraube in das Gewinde durch den Robotermanipulator (103) kraftgeregelte oder impedanzgeregelte oder admittanzgeregelte Drehbewegungen und/oder Kippbewegungen und/oder translatorische Bewegungsmuster des Gewindestifts der Schraube ausgeführt werden, bis eine bereitgestellte Kraft-/Momenten-Signatur oder eine Positions-/Geschwindigkeits-/Beschleunigungssignatur am Effektor erreicht oder überschritten wird, die indiziert, dass das freie Ende des Gewindestifts in das Gewinde erfolgreich in das Gewinde eingebracht ist.

3. Schraubvorrichtung nach Anspruch 2,
bei der die Steuereinheit (104) zur Ausführung des folgenden dritten Steuerprogramms ausgeführt und eingerichtet ist:
- nach dem erfolgreichen Einbringen des freien Endes des Gewindestifts in das Gewinde erfolgt ein kraftgeregeltes oder impedanzgeregeltes oder admittanzgeregeltes Eindrehen der Schraube in das Gewinde, bis eine bereitgestellte Kraft-/Momenten-Signatur oder eine Positions-/Geschwindigkeits-/Beschleunigungssignatur am Effektor erreicht oder überschritten wird, die indiziert, dass die Schraube erfolgreich in das Gewinde eingedreht ist.

4. Schraubvorrichtung nach einem der Ansprüche 1 bis 3,
bei der die Schraubvorrichtung eine Datenschnittstelle zu einem Datennetz aufweist, und die Schraubvorrichtung dazu eingerichtet und ausgeführt ist, das erste und/oder das zweite und/oder das dritte Steuerprogramm und/oder weitere Steuerprogramme aus dem Datennetz zu laden.

5. Schraubvorrichtung nach einem der Ansprüche 1 bis 4,
bei der die Schraubvorrichtung dazu eingerichtet und ausgeführt ist, Steuerungs- und Regelungsparameter zu dem ersten und/oder zweiten und/oder dritten Steuerprogramm und/oder zu weiteren Steuerprogrammen aus dem Datennetz zu laden.

6. Schraubvorrichtung nach einem der Ansprüche 4 oder 5,
bei der die Schraubvorrichtung dazu eingerichtet und ausgeführt ist, Steuerungs- und Regelungsparameter zu dem ersten und/oder dem zweiten und/oder dem dritten Steuerprogramm und/oder zu weiteren Steuerprogrammen über eine manuelle Eingabeschnittstelle der Schraubvorrichtung und/oder über einen Teach-In-Vorgang zu laden, bei dem der Robotermanipulator manuell geführt wird.

7. Schraubvorrichtung nach einem der Ansprüche 4 bis 6,
bei der die Schraubvorrichtung dazu eingerichtet und ausgeführt ist, das Laden von Steuerungsprogrammen und/oder von zugehörigen Steuerungs- und Regelungsparametern aus dem Datennetz von einer Remote-Station aus zu steuern, wobei die Remote-Station ebenfalls mit dem Datennetz verbunden ist.

8. Schraubvorrichtung nach einem der Ansprüche 4 bis 7,
bei der die Schraubvorrichtung dazu eingerichtet und ausgeführt ist, lokal an der Schraubvorrichtung vorhandene Steuerungsprogramme und/oder zugehörige Steuerungs- und Regelungsparametern nach Anforderung oder autonom über das Datennetz an andere gleichartige Vorrichtungen und/oder andere Empfänger zu senden.

9. Schraubvorrichtung nach einem der Ansprüche 6 bis 8,
bei der die Schraubvorrichtung dazu eingerichtet und ausgeführt ist, lokal an der Schraubvorrichtung geladene Steuerungsprogramme mit den zugehörigen Steuerungs- und Regelungsparametern von einer Remote-Station, die ebenfalls mit dem Datennetz verbunden ist, zu starten.

10. Verfahren zum Betrieb einer Schraubvorrichtung, wobei die Schraubvorrichtung umfasst:
- einen Vorratsbehälter für Schrauben mit einem Schraubenkopf, einem Schraubenkopfantrieb und einem Gewindestift,
- einen Robotermanipulator mit einem auf den Schraubenkopf und den Schraubenkopfantrieb abgestimmten Effektor, der zum Aufnehmen und Handhaben einer solchen Schraube ausgeführt und eingerichtet ist,
- eine mit dem Vorratsbehälter verbundene Vereinzelungseinheit, die Schrauben aus dem Vorratsbehälter an einer Schnittstelle derart vereinzelt an einer bekannten Position bereitstellt, dass ein jeweiliger Schraubenkopf für den Effektor zugänglich ist,
- eine Steuereinheit zum Steuern/Regeln des Robotermanipulators, wobei die Steuereinheit folgendes erstes Steuerprogramm ausgeführt:
o der Effektor wird durch den Robotermanipulator entlang einer vorgegebenen Trajektorie T1 mit einer Soll-Orientierung Oₛₒₗₗ,_{T1}(R_{T1}) zum Schraubenkopf einer an der Schnittstelle bereitgestellten Schraube geführt (201), wobei entlang der Trajektorie T1 für Orte R_{T1} der Trajektorie T1 eine Soll-Orientierung O_{soll,T1}(R_{T1}) des Effektors definiert ist, wobei zum Aufnehmen (202) des Schraubenkopfes in den Effektor durch den Robotermanipulator kraftgeregelte oder impedanzgeregelte oder admittanzgeregelten Drehbewegungen und/oder Kippbewegungen und/oder translatorische Bewegungsmuster des Effektors ausgeführt werden, bis eine bereitgestellte Kraft-/Momenten-Signatur oder eine Positions-/Geschwindigkeits-/Beschleunigungssignatur am Effektor erreicht oder überschritten wird, die indiziert, dass das Aufnehmen der Schraube durch den Effektor innerhalb vordefinierter Toleranzen erfolgreich abgeschlossen ist.

## Claims

1. Screwing device, comprising
- a storage container (101) for screws with a screw head, a screw head drive and a threaded pin,
- a robot manipulator (103) with an effector adapted to the screw head and the screw head drive, designed and set up to pick up and handle such a screw,
- a separation unit connected to the storage container (102), which provides screws from the storage container (102) at an interface separated in such a way at a known position so that a respective screw head is accessible for the effector,
- a control unit (104) for controlling/regulating the robot manipulator (103), wherein the control unit (104) is designed and set up for the execution of the following first control program:
o The effector is guided by the robot manipulator along a specified trajectory T1 with a target orientation O_{soll,T1}(R_{T1}) to the screw head of a screw provided at the interface, wherein, along the trajectory T1 for locations R_{T1} of trajectory T1, the target orientation O_{soll,T1}(R_{T1}) of the effector is defined, wherein force-controlled or impedance-controlled or admittance-controlled rotational movements and/or tilting movements and/or translational movement patterns and/or power winder patterns of the effector are carried out for picking up the screw head into the effector via the robot manipulator until a provided force/torque signature or a position/speed signature on the effector is reached or exceeded, indicating that the effector has successfully completed picking up the screw within predefined tolerances.

2. Screw device according to Claim 1, in which the control unit (104) is designed and set up for the execution of the following second control program:
- the screw picked up by the effector is guided by the robot manipulator (103) along a specified trajectory T2 with a target orientation O_{soll,T2}(R_{T2}) to a thread arranged at a position known except for a tolerance range, wherein, along the trajectory T2 for locations R_{T2} of trajectory T2, the target orientation O_{soll,T2}(R_{T2}) of the threaded pin of the screw is defined, wherein force-controlled or impedance-controlled or admittance-controlled rotational movements and/or tilting movements and/or translational movement patterns of the threaded pin of the screw are carried out for the insertion of the free end of the threaded pin of the screw into the thread via the robot manipulator (103) until a provided force/torque signature or a position/speed/acceleration signature on the effector is reached or exceeded, which indicates that the free end of the threaded pin has been successfully inserted into the thread.

3. Screw device according to Claim 2, in which the control unit (104) is designed and set up for the execution of the following third control program:
- after the successful insertion of the free end of the threaded pin into the thread, a force-controlled or impedance-controlled or admittance-controlled screwing of the screw into the thread takes place until a provided force/torque signature or a position/speed/acceleration signature on the effector is reached or exceeded, indicating that the screw has been successfully screwed into the thread.

4. Screw device according to any one of Claims 1 to 3, in which the screw device comprises a data interface to a data network, and the screw device is set up and designed to load the first and/or the second and/or the third control program and/or further control programs from the data network.

5. Screw device according to any one of Claims 1 to 4, in which the screw device is set up and designed to load control and regulation parameters for the first and/or second and/or third control program and/or for further control programs from the data network.

6. Screw device according to any one of Claims 4 or 5, in which the screw device is set up and designed to load control and regulation parameters for the first and/or the second and/or the third control program and/or for further control programs via a manual input interface of the screw device and/or via a teach-in process, in which the robot manipulator is manually guided.

7. Screw device according to any one of Claims 4 to 6, in which the screw device is set up and designed to control the loading of control programs and/or associated control and regulation parameters from the data network from a remote station, wherein the remote station is also connected to the data network.

8. Screw device according to any one of Claims 4 to 7, in which the screw device is set up and designed to send existing control programs and/or associated control and regulation parameters on the screw device according to requirements locally, or autonomously via the data network to other similar devices and/or other receivers.

9. Screw device according to any one of Claims 6 to 8, in which the screw device is set up and designed to start control programs loaded locally on the screw device with the associated control and regulation parameters from a remote station, which is also connected to the data network.

10. Method for operating a screw device, wherein the screw device comprises:
- a storage container for screws with a screw head, a screw head drive and a threaded pin,
- a robot manipulator with an effector adapted to the screw head and the screw head drive, designed and set up to pick up and handle such a screw,
- a separation unit connected to the storage container, which provides screws from the storage container at an interface separated in such a way at a known position that a respective screw head is accessible for the effector,
- a control unit for controlling/regulating the robot manipulator, wherein the control unit executes the following first control program:
o The effector is guided (201) by the robot manipulator along a specified trajectory T1 with a target orientation O_{soll,T1}(R_{T1}) to the screw head of a screw provided at the interface, wherein, along the trajectory T1 for locations R_{T1} of trajectory T1, a target orientation O_{soll,T1} (R_{T1}) of the effector is defined, wherein force-controlled or impedance-controlled or admittance-controlled rotational movements and/or tilting movements and/or translational movement patterns and/or power winder patterns of the effector are carried out for picking up (202) the screw head into the effector via the robot manipulator until a provided force/torque signature or a position/speed/acceleration signature on the effector is reached or exceeded, indicating that the effector has successfully completed picking up the screw within predefined tolerances.

## Revendications

1. Dispositif de vissage comprenant :
- un conteneur de stockage (101) pour des vis avec une tête de vis, un entraînement de tête de vis et une tige filetée,
- un manipulateur robotisé (103) avec un effecteur réglé sur la tête de vis et l'entraînement de tête de vis, qui est réalisé et agencé pour recevoir et manipuler une vis de ce type,
- une unité de séparation (102) reliée au conteneur de stockage, qui prépare des vis individuellement sur une interface à partir du conteneur de stockage (102) à une position connue de telle sorte qu'une tête de vis correspondante est accessible à l'effecteur,
- une unité de commande (104) pour la commande/le réglage du manipulateur robotisé (103), sachant que l'unité de commande (104) est réalisée et agencée pour exécuter le premier programme de commande suivant :
o l'effecteur est guidé par le manipulateur robotisé le long d'une trajectoire prédéfinie T1 avec une orientation théorique O_{théo},_{T1}(R_{T1}) vers la tête de vis d'une vis préparée sur l'interface, sachant que l'orientation théorique O_{théo},_{T1}(R_{T1}) de l'effecteur est définie le long de la trajectoire T1 pour des emplacements R_{T1} de la trajectoire T1, sachant que pour recevoir la tête de vis dans l'effecteur, des mouvements de rotation et/ou des mouvements de basculement et/ou des types de mouvements translatoires et/ou des types de clé de l'effecteur réglés en force ou réglés en impédance ou réglés en admittance sont effectués jusqu'à ce qu'une signature Force/Couple ou une signature Position/Vitesse préparée soit atteinte ou dépassée sur l'effecteur, qui indique que la réception de la vis par l'effecteur est achevée avec succès dans des tolérances prédéfinies.

2. Dispositif de vissage selon la revendication 1, pour lequel l'unité de commande (104) est exécutée et agencée pour exécuter le deuxième programme de commande suivant :
- la vis reçue par l'effecteur est guidée par le manipulateur robotisé (103) le long d'une trajectoire prédéfinie T2 avec une orientation théorique O_{théof},_{T2}(R_{T2}) vers un filetage disposé sur une position connue jusqu'à une bande de tolérances, sachant que l'orientation théorique O_{théo},_{T2}(R_{T2}) de la tige filetée de la vis est définie le long de la trajectoire T2 pour des emplacements R_{T2} de la trajectoire T2, sachant que pour introduire l'extrémité libre de la tige filetée de la vis dans le filetage, des mouvements de rotation et/ou des mouvements de basculement et/ou des types de mouvements translatoires réglés en force ou réglés en impédance ou réglés en admittance de la tige filetée de la vis sont exécutés par le manipulateur robotisé (103) jusqu'à ce qu'une signature Force/Couple ou une signature Position/Vitesse/Accélération préparée soit atteinte ou dépassée sur l'effecteur, qui indique que l'extrémité libre de la tige filetée dans le filetage est introduite avec succès dans le filetage.

3. Dispositif de vissage selon la revendication 2, pour lequel l'unité de commande (104) est réalisée et agencée pour exécuter le troisième programme de commande suivant :
- après l'introduction réussie de l'extrémité libre de la tige filetée dans le filetage, un vissage de la vis dans le filetage réglé en force ou réglé en impédance ou réglé en admittance a lieu jusqu'à ce qu'une signature Force-Couple ou une signature Position/Vitesse/Accélération préparée soit atteinte ou dépassée sur l'effecteur, qui indique que la vis est vissée avec succès dans le filetage.

4. Dispositif de vissage selon l'une quelconque des revendications 1 à 3, pour lequel le dispositif comporte une interface de données pour un réseau de données et le dispositif de vissage est agencé et réalisé pour charger le premier et/ou le deuxième et/ou le troisième programme de commande et/ou d'autres programmes de commande en dehors du réseau de données.

5. Dispositif de vissage selon l'une quelconque des revendications 1 à 4, pour lequel le dispositif de vissage est agencé et réalisé pour charger des paramètres de commande et des paramètres de réglage pour le premier et/ou deuxième et/ou troisième programme de commande et/ou d'autres programmes de commande en dehors du réseau de données.

6. Dispositif de vissage selon l'une quelconque des revendications 4 ou 5, pour lequel le dispositif de vissage est agencé et réalisé pour charger des paramètres de commande et de réglage pour le premier et/ou deuxième et/ou troisième programme de commande et/ou d'autres programmes de commande par le biais d'une interface d'entrée manuelle du dispositif de vissage et/ou par le biais d'une opération d'apprentissage, pour laquelle le manipulateur robotisé est guidé manuellement.

7. Dispositif de vissage selon l'une quelconque des revendications 4 à 6, pour lequel le dispositif de vissage est agencé et réalisé pour piloter le chargement de programmes de commande et/ou de paramètres de commande et de réglage correspondants à partir du réseau de données d'un poste à distance, sachant que le poste à distance est également relié au réseau de données.

8. Dispositif de vissage selon l'une quelconque des revendications 4 à 7, pour lequel le dispositif de vissage est agencé et réalisé pour envoyer des programmes de commande existant localement sur le dispositif de vissage et/ou des paramètres de commande et de régulation correspondants selon demande ou de façon autonome par le biais du réseau de données à d'autres dispositifs analogues et/ou à d'autres récepteurs.

9. Dispositif de vissage selon l'une quelconque des revendications 6 à 8, pour lequel le dispositif de vissage est agencé et réalisé pour lancer des programmes de commande chargés localement sur le dispositif de vissage avec les paramètres de commande et de réglage correspondants par un poste à distance, qui est également relié au réseau de données.

10. Procédé destiné à faire fonctionner un dispositif de vissage, sachant que le dispositif de vissage comprend :
- un conteneur de stockage pour des vis avec une tête de vis, un entraînement de tête de vis et une tige filetée,
- un manipulateur robotisé avec un effecteur réglé sur la tête de vis et l'entraînement de tête de vis, qui est réalisé et agencé pour recevoir et manipuler une vis de ce type,
- une unité de séparation reliée au conteneur de stockage, qui prépare des vis individuellement sur une interface à partir du conteneur de stockage à une position connue de telle sorte qu'une tête de vis correspondante est accessible à l'effecteur,
- une unité de commande pour la commande/le réglage du manipulateur robotisé, sachant que l'unité de commande est réalisée et agencée pour exécuter le premier programme de commande suivant :
o l'effecteur est guidé (201) par le manipulateur robotisé le long d'une trajectoire prédéfinie T1 avec une orientation théorique O_{théo},_{T1}(R_{T1}) vers la tête de vis d'une vis préparée sur l'interface, sachant qu'une orientation théorique O_{théo}^{,}_{T1}(R_{T1}) de l'effecteur est définie le long de la trajectoire T1 pour des emplacements R_{T1} de la trajectoire T1, sachant que pour la réception (202) de la tête de vis dans l'effecteur, des mouvements de rotation et/ou des mouvements de basculement et/ou des types de mouvements translatoires de l'effecteur réglés en force ou réglés en impédance ou réglés en admittance sont exécutés par le manipulateur robotisé jusqu'à ce qu'une signature Force/Couple ou une signature Position/Vitesse/Accélération préparée soit atteinte ou dépassée sur l'effecteur, qui indique que la réception de la vis par l'effecteur est achevée avec succès dans des tolérances prédéfinies.
